Europäisches Patentamt

(19) European Patent Office

Office européen des brevets

(11) Publication number: **0 225 181 B1**

## EUROPEAN PATENT SPECIFICATION

(12)

(45) Date of publication of patent specification: **22.04.92**  (51) Int. Cl.⁵: **H04N 7/12**

(21) Application number: **86309274.8**

(22) Date of filing: **27.11.86**

(54) **High efficiency coding apparatus.**

(30) Priority: **29.11.85 JP 268817/85**

(43) Date of publication of application:
**10.06.87 Bulletin 87/24**

(45) Publication of the grant of the patent:
**22.04.92 Bulletin 92/17**

(84) Designated Contracting States:
**AT DE FR GB NL**

(56) References cited:
**US-A- 4 455 571**

(73) Proprietor: **SONY CORPORATION**
**7-35 Kitashinagawa 6-Chome Shinagawa-ku**
**Tokyo 141(JP)**

(72) Inventor: **Kondo, Tetsujiro c/o Sony Corpora-**
**tion**
**7-35 Kitashinagawa 6-chome**
**Shinagawa-ku Tokyo(JP)**

(74) Representative: **Ayers, Martyn Lewis Stanley**
**et al**
**J.A. KEMP & CO. 14 South Square Gray's Inn**
**London, WC1R 5EU(GB)**

EP 0 225 181 B1

## Description

The invention relates to a high efficiency coding apparatus and, more particularly, to a high efficiency coding apparatus for compressing the average bit number per picture element of picture data such as a digital television signal.

Several methods for reducing the average bit number per picture element or for reducing the sampling frequency are known as encoding methods of television signals, with a view to narrowing a transmission band.

For the purpose of reducing the sampling frequency, there has been proposed an encoding method for reducing the amount of picture data to one half with subsampling and for transmitting points and flags for indicating the positions of the subsampling points to be used in subsequent interpolation (i.e. for indicating which of the data of the subsampling points lying above and below or left and right to the interpolation points should be employed).

DPCM (differential PCM) is known as an encoding method for reducing the average bit number per picture element. The DPCM device pays attention to the facts that there is a high correlation between picture elements of a television signal and that the difference between adjacent picture elements is small, and transmits this difference signal through quantization.

There is known a third encoding method for reducing the average bit number per picture element by dividing one field picture into small blocks to transmit an average value, a standard deviation and an encoding code of one bit in one-to-one correspondence with each picture element.

In the first mentioned encoding method, for reducing a sampling frequency with the use of a subsampling technique, there is the possibility that folded distortion may occur, because the sampling frequency is reduced to one half.

DPCM has a problem in that errors propagate through subsequent encoding.

The method of performing the encoding in a block unit has a drawback in that block distortion occurs at the boundary of blocks.

The present invention provides a high efficiency coding apparatus for obtaining a dynamic range defined by a maximum value and a minimum value of a plurality of picture elements contained in a two-dimensional block and performing the encoding adaptive to the dynamic range, as described in the specification of European Patent EP-A-0 186 444 which forms part of the prior art for the purpose of Article 54(3) EPC. In this Patent, the picture quality of a reproduced picture suffers little deterioration, because a reversible encoding technique is employed. However, as blocks with large dynamic ranges appear continuously, the bit number for encoding increases to exceed the transmission-allowance capacity. As a result, the transmission at a desired predetermined rate cannot be achieved.

An object of the present invention is, therefore, to provide a high efficiency coding apparatus free from the problems in the prior art methods such as the occurrence of abasing distortion, the propagation of coding error, and the occurrence of block distortion.

Another object of the present invention is to provide a high efficiency coding apparatus for enabling the total data amount during a predetermined period to be less than the capacity of the transmission means through which the data is transmitted.

A further object of the present invention is to provide a high efficiency coding apparatus capable of shortening the required time for performing the buffering operation.

According to the present invention, there is provided a high efficiency coding apparatus for coding digital video data in a block format allowing video data compression, comprising

first and second detecting means for detecting respective extreme values of the digital video data of plural picture elements in said block, the extreme value detected by the first detecting means being the maximum of said values, and that detected by the second detecting means being the minimum;

means for generating dynamic range information of the block from said maximum and minimum values;

means for forming the difference between one of said extreme values from each of the digital video data to generate modified digital video data;

means for generating a distribution table of said dynamic range information during a predetermined period;

means for determining a number of bits in which to encode each word of a block during said predetermined period according to said dynamic range information of said distribution table and the capacity of data transmission means;

encoding means for encoding said modified digital video data using the number of bits determined by said determining means per word; and

transmitting means for transmitting the output of said encoding means, a first additional code per block

2

formed of at least two of said maximum value, minimum value and a signal based on said dynamic range information, and a second additional code for each said predetermined period.

Preferably, the one of the two extreme values used to form said modified digital data is the minimum detected value of the video digital data.

In the illustrated embodiment of this invention, a plurality of picture fields are divided into a plurality of blocks. Each block is processed separately. First, the dynamic range of the block and the minimum level are obtained. The distribution table of the dynamic range during the plural picture fields is generated. The encoding bit number is determined by the distribution table of the dynamic range DR and the capacity of the transmission line such as a VTR. Therefore, the capacity is the total data amount recordable during the plural picture fields. The modified digital video data of each block generated by subtracting the minimum level from said digital video data of the picture element is encoded with the determined encoding bit number. The encoded data includes a first additional code per block formed of at least two of the maximum level, minimum level and a signal based on the DR, and a second additional code for plural picture fields, such as the maximum distortion or the parameter of the threshold values of the dynamic range determining the boundary of the plurality of encoding bit numbers. The transmitted total data amount can consequently be controlled so that it is selected within the capacity of the transmission line. The time required for the buffering operation can be shortened using the distribution table.

The invention will now be described with reference to the accompanying drawings, in which:-

Figure I is a block diagram of one embodiment of this invention;

Figure 2 is a block diagram showing a structure on the reception side;

Figure 3 is a schematic diagram for describing a block used as a unit of process for encoding;

Figures 4 and 5 are schematic diagrams for one example and its description of a construction of a block-formation circuit;

Figure 6 is a block diagram of one example of a dynamic range-detection circuit;

Figures 7A and 7B are schematic diagrams for explaining distribution;

Figure 8 is a block diagram of one example of an encoder;

Figures 9 and I0 are schematic diagrams for describing one and another examples for quantization, respectively;

Figures IIA to IIE are schematic diagrams for describing non-linear variable length encoding;

Figures I2 and I3 are graphs for describing the distribution;

Figure I4 is a flow chart for explaining the buffering operation;

Figures I5 and I7 are block diagrams for illustrating each structure of buffering circuits used in the invention;

Figure I6 is a block diagram for showing the detailed structure of an address controller.

In the drawings, identical reference numerals denote identical structural elements.

Figure I shows the whole structure of the transmission side (recording side) of this invention. A digital television signal obtained by quantizing one sample into eight bits, for example, is given to an input terminal indicated at I. The digital television signal is supplied to a block segmentation circuit 2.

The input digital television signal is converted by the block segmentation circuit 2 into a continuous signal representing each three dimensional block, which is a unit of encoding. In the embodiment, one block is defined as the size (four lines x four picture elements x four frames = 64 picture elements). The output signal of the circuit 2 is supplied to a delay circuit 3a and a dynamic range-detection circuit 4. The circuit 4 detects a dynamic range DR and a minimum value MIN for each block. Simultaneously, the detection circuit 4 obtains a number Nb of bits required for quantization using the detected DR and maximum distortion Ex.

The dynamic range DR is given to a distribution table generating circuit 5. The circuit 5 sums up the distribution of all the dynamic ranges DRs every four frames. The summed distribution is supplied to a maximum-distortion-decision circuit 6. The circuit 6 decides the maximum distortion Ex (the circuit 6 is hereafter referred to as "Ex decision circuit 6"). The maximum distortion is the maximum error value occurring at the time of decoding.

The distribution of the dynamic ranges assumes a pattern showing a characteristic of picture information in four frame periods. For instance, in the case of a frequently moving picture or a picture having a fine picture pattern, the distribution of comparatively large dynamic ranges DRs is great, and the distribution of the dynamic ranges DRs does not concentrate on a certain point. In contrast, in the case of a less moving picture or a picture having a large picture pattern, the distribution of small dynamic ranges is great, and the distribution concentrates on a certain point. To compare the former with the latter, the amount of information to be transmitted in the former is greater.

The maximum distortion Ex is determined depending on the amount of transmission information detected from the distribution of the DRs. When the amount of transmission information is large, the maximum distortion Ex is judged to be large, whereas if the amount of transmission information is small, the maximum distortion Ex is taken to be small. Based on the maximum distortion Ex and the distribution of the dynamic ranges already obtained, the total number of bits required in four frame periods is obtained. When this total number of bits and additional data are sent during the four frame periods, the verification is made of whether or not that sending exceeds the transmission capacity of a transmission line. For instance, in the case of the transmission capacity of 64 MBPS (megabits/sec), it becomes (64 x (4/30) ≃ 8.5 M bits) in terms of four frame periods. The maximum distortion Ex is determined by the Ex decision circuit 6 so that it does not exceed this transmission capacity.

The delay circuit 3a delays time and picture element data given at the dynamic range-detection circuit 4, the distribution table generating circuit 5 and the Ex decision circuit 6. Picture element data PD from the delay circuit 3a is quantized by an encoder 7 to be converted into an encoded code DT having the number of compressed bits.

The above-mentioned DR of each block, the minimum value MIN of each block and the maximum distortion Ex of each four frames, which are delayed by delay circuits 3a and 3c, respectively, are supplied to the encoder 7. Picture element data PDI is produced by subtracting the minimum value MIN from the picture element data PD. The picture element data PDI is quantized.

In the encoder 7, an encoded code DT is developed for indicating to which of plural level ranges that are formed by dividing the dynamic range of each block, the picture element data PDI belongs. The number of bits of the encoded code DT is determined by the dynamic range DR and the maximum distortion Ex. The encoder 7 has a ROM (read only memory) for quantization corresponding to sixteen kinds of maximum distortions Ex ranging from (Ex = 0) to (Ex = I5), for example as mentioned later.

The encoded data DT is given to a frame segmentation circuit 8. In addition to the number Nb of bits (three bits) and the minimum value MIN (eight bits) required as additional codes for each block, the maximum distortion Ex is supplied to the circuit 8 as an additional code every four frames. The frame segmentation circuit 8 performs the processing for error correction and encoding for the encoded code DT and said additional codes, and adds a synchronisation signal. Transmission data is obtained at an output terminal 9 of the circuit 8, and the transmission data is sent out to the transmission line such as a digital channel.

As has been described before, although the encoded code DT has a variable bit number every block, the bit number of the block is necessarily determined from the necessary bit number Nb in the additional codes. As a result, despite the adoption of a variable length code, there is an advantage that no redundant code for showing the separation of data in the transmission data is needed.

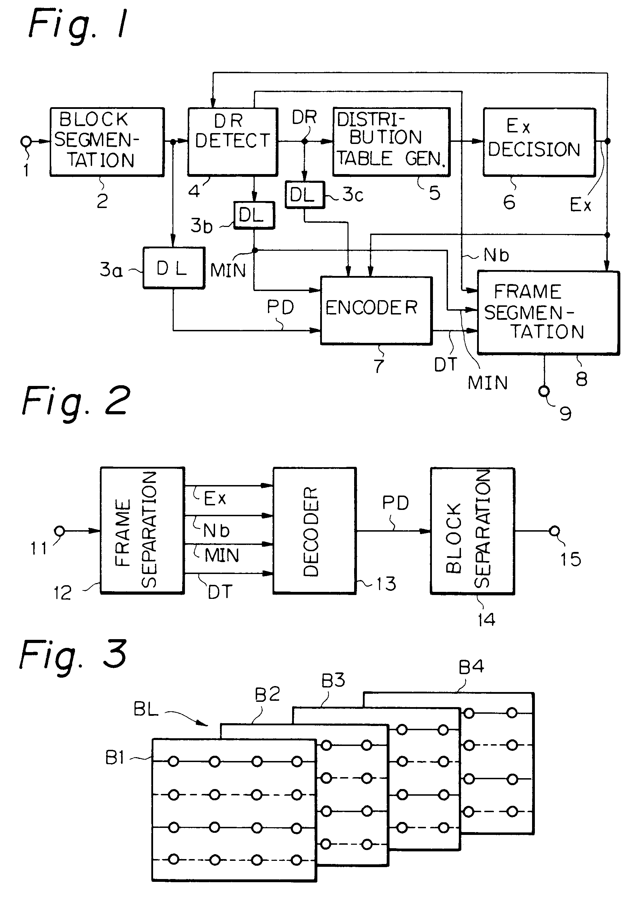

Figure 2 shows the structure on the reception (or reproduction) side. Reception data from an input terminal II is supplied to a frame separation circuit I2. The encoded code DT, and the additional codes Ex, Nb and MIN are separated by the circuit I2 and simultaneously error correction processing is performed. The encoded code DT and the additional codes are fed to a decoder I3.

The decoder I3 performs the processing opposite to that of the encoder 7 on the transmission side. Namely, the data PDI (which was derived by subtracting the eight-bit minimum level from the original sample PD) is added to the minimum value MIN to give the picture element data PD. The output data PD of the decoder I3 is supplied to a block separation circuit I4. Contrary to the block segmentation circuit 2 on the transmission side, the block separation circuit I4 is a circuit for converting decoded data of the block order into the order similar to the television signal scanning. A decoded television signal is produced at an output terminal I5 of the block separation circuit I4.

Referring to Figure 3, a block, which is a unit of encoding, will be explained. In Figure 3, BL indicates one block consisting of two-dimensional areas BI, B2, B3 and B4, each of which belongs to each of four frames, and solid lines indicate lines in odd fields, while broken lines indicate lines in even fields. The areas BI, B2, B3 and B4 (of four lines x four picture elements) are composed of four picture elements contained respectively in four lines of each frame. Therefore, one block consists of picture elements of (4 x 4 x 4 = 64).

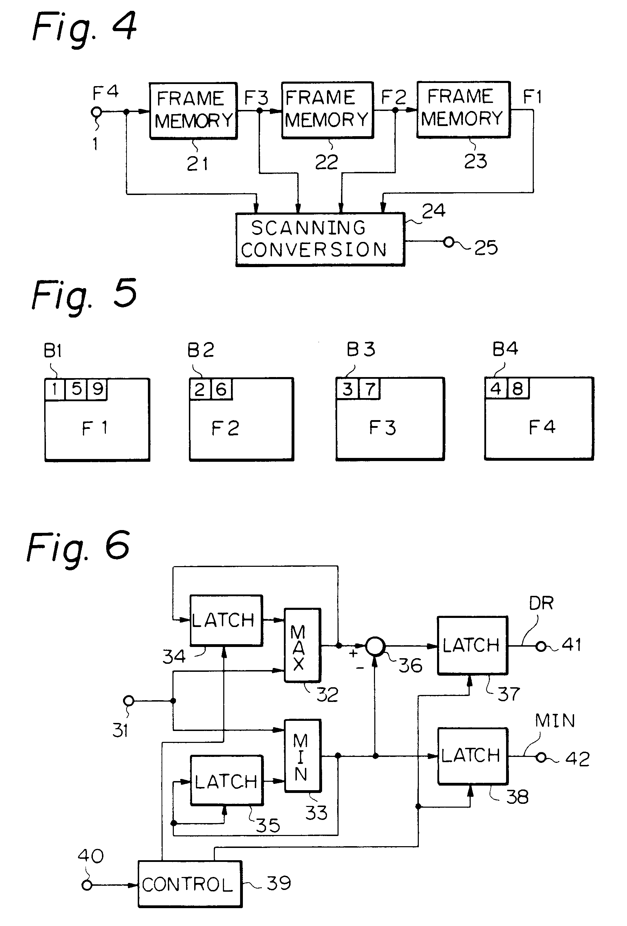

Figure 4 shows one example of the abovementioned block segmentation circuit 2. Frame memories 2I, 22 and 23 are cascaded from the input terminal I. Picture element data of the present frame F4 and picture element data of previous frames F3, F2 and FI taken out of the frame memories 2I, 22 and 23 respectively are given to a scanning conversion circuit 24.

Respective picture element data of the corresponding two-dimensional areas BI, B2, B3 and B4 in four frames are sequentially obtained at an output terminal 25 of the scanning conversion circuit 24. That is, as shown in Figure 5, the corresponding areas BI, B2, B3 and B4 in the four continuous frames FI, F2, F3 and F4 are output in the order shown by the numerals.

Figure 6 shows a construction of one example of the dynamic range-detection circuit 4. Picture element

4

data, which requires the encoding of each block from the block segmentation circuit 2, is sequentially supplied to an input terminal 3l. The picture element data from the input terminal 3l is fed to selectors 32 and 33. The selector 32 on one side selects and outputs data which is the larger of the picture element data of an input digital television signal and the output data of a latch 34. The selector 33 on the other side selects and outputs data which is the smaller of the picture element data of the input digital television signal and the output data of a latch 35.

The output data of the selector 32 is supplied to a subtraction circuit 36 and taken into the latch 34. The output data of the selector 33 is given to the subtraction circuit 36 and a latch 38 and taken into the latch 35. A latch pulse is given from a control section 39 to the latches 34 and 35. Timing signals such as a sampling clock synchronised with the input digital television signal and a synchronisation signal are fed to the control section 39 from a terminal 40. The control section 39 supplies latch pulses to the latches 34 and 35 and the latches 37 and 38 at predetermined timings.

Initialisation for the contents of the latches 34 and 35 is made at the beginning of each block. All "0s" are initially set in the latch 34, while all "1s" are initially set in the latch 35. The maximum level among picture element data of the identical block, which is sequentially given, is stored in the latch 34. Also, the minimum level among picture element data of the identical block, which is supplied sequentially, is stored in the latch 35.

Upon completion of the detection of the maximum and minimum levels with respect to one block, the maximum level of the corresponding block appears at the output of the selector 32. On the other hand, the minimum level of the corresponding block is produced at the output of the selector 33. In response to the completion of the detection with respect to one block, the initial setting for the latches 34 and 35 is performed again.

The dynamic range DR of each block obtained by the subtraction of the maximum level MAX from the selector 32 and the minimum level MIN from the selector 33 is produced at the output of the subtraction circuit 36. These dynamic ranges DRs and minimum level MIN are latched into the latches 37 and 38 by the latch pulses from the control block 39. The dynamic range DR of each block is obtained at the output terminal 4l of the latch 37, while the minimum level MIN of each block is obtained at an output terminal 42 of the latch 38. Also, a circuit for detecting the necessary bit number Nb determined by the DR and the maximum distortion Ex is provided, although it is omitted from Figure 6.

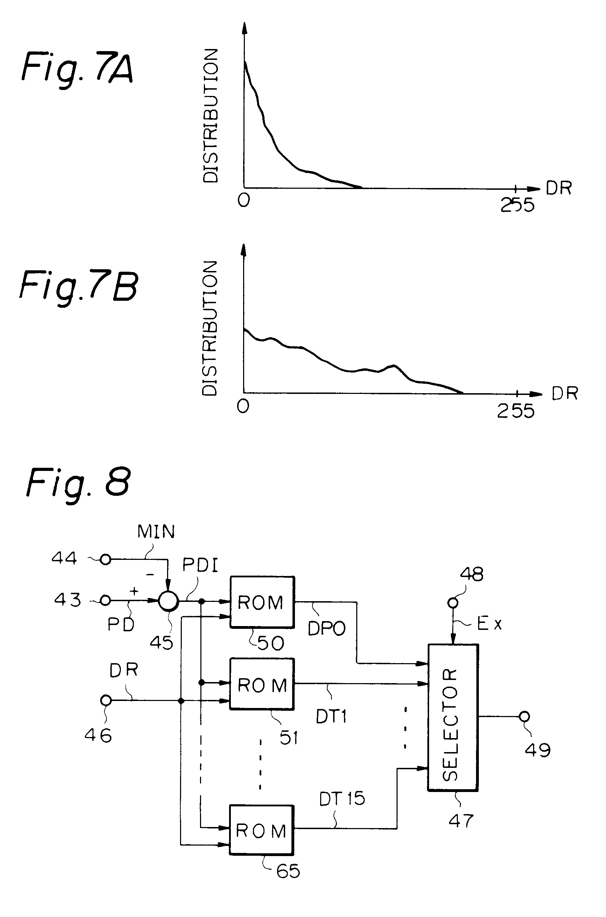

In the distribution table generating circuit 5, the distribution of 256 dynamic ranges DRs of 0, 1, 2, --- 255 in the case of eight bits is summed up every four frames. Figure 7 shows two contrasting examples of distribution.

A pattern of the distribution shown in Figure 7A indicates the case where the distribution of small DRs is greater. Such a pattern of the distribution as shown in Figure 7A is provided with respect to still pictures, pictures with less moving portions and large-patterned pictures. In this case, since the bit number required for quantisation becomes small, the maximum distortion Ex is small. On the other hand, the pattern of the frequency distribution shown in Figure 7B shows the case where DRs are dispersed. Contrary to the abovementioned case, a pattern of the distribution such as shown in Figure 7B is produced with respect to pictures with many moving portions and pictures of fine picture pattern. In this latter case, because the bit number necessary for quantisation increases, the maximum distortion Ex becomes great.

Given the maximum distortion Ex, the bit number needed for quantisation is necessarily defined. As an example, the necessary bit number Nb and a decoded value in the case of (Ex = 4) are illustrated at the following table. In this example, the magnitude of the decoded value is supposed to take a fixed value as shown at the table given below. As a result, there is no need to send the dynamic range as an additional code. It can be said that only sending the minimum value (eight bits) and the necessary bit number Nb is enough, instead.

| DR | Nb | Decoded Value |
|---|---|---|
| 0 ~ 8 | 0 | 4 |
| 9 ~ 17 | 1 | 4, 13 |
| 18 ~ 35 | 2 | 4, 13, 22, 31 |
| 36 ~ 71 | 3 | 4, 13, 22, 31, 40, 49 .. |
| 72 ~ 143 | 4 | . . . . |
| 144 ~ 255 | 5 | . . . . |

As mentioned previously, since the dynamic range DR is detected for each block, the necessary bit number of each picture element in one block is identical. In the case of (Ex = 4) and with respect to picture elements of block (DR = 34) (MIN = l00), the level ranges are divided into four ranges of (0 ~ 8), (9 ~ 17), (18 ~ 26) and (27 ~ 35) and two-bit quantisation is performed by the four level ranges represented by [(00), (0l), (l0), (ll)]. For instance, with a level (l3l) of a picture, the minimum value MIN is eliminated to convert the level into (3l). Because the level (3l) is included in the level range (27 ~ 35), it is quantised into an encoded code DT of (ll).

When the dynamic range DR is divided into regions every nine levels as in this example, the minimum value (eight bits) MIN and the necessary bit number Nb (four bits) are sufficient for the additional codes for each block.

On the other hand, in a system in which the ranges to be divided are determined so as to be adaptable to each dynamic range DR on a case-by-case basis differently from the example, any two of the minimum value (eight bits), the DR (eight bits) and the maximum value (eight bits) are needed as the additional codes. In the latter system, the data compression rate becomes low, but decoding distortion is greatly improved as compared with the previous system.

The total bit number of encoded codes DTs in four frame periods is detected on the basis of data for showing the distribution of the abovementioned DR and the maximum distortion Ex. The total bit number in the four frame periods is calculated by the total bit number of the encoded codes DTs and that of the additional codes (maximum distortion Ex, the necessary bit number Nb of each block, minimum value MIN of each block). The Ex decision circuit 6 decides the maximum distortion Ex so that the total bit number in the four frame periods does not exceed the transmission capacity. Specifically, from (Ex = 0), the values of the maximum distortion Ex increase one by one e.g. as l, 2, 3, 4, 5, ---, l5, and the maximum distortion Ex is selected so that the abovementioned total bit number lies within the transmission capacity. The value of the maximum distortion Ex is selected to be as small a value as possible.

The reception side performs the decoding on the basis of the maximum distortion Ex and the necessary bit number Nb in reception data to output a decoded level. In the above described table (Ex = 4), values [4, l3, 22, 3l] are used as decoded levels in the case of the necessary bit number Nb of two bits. In the abovementioned case of (DR = 34) (DT = ll), a decoded level (3l) is obtained, and (l00) is added to the decoded level (3l) to produce a decoded output of a level of (l3l).

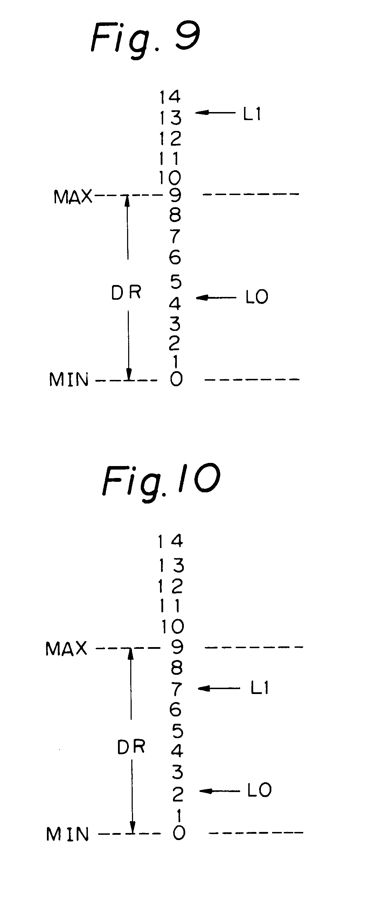

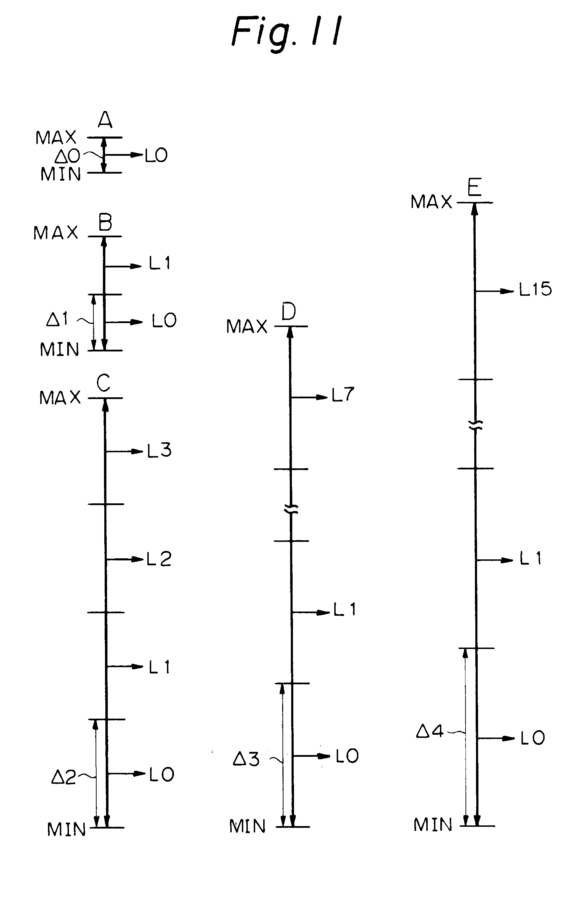

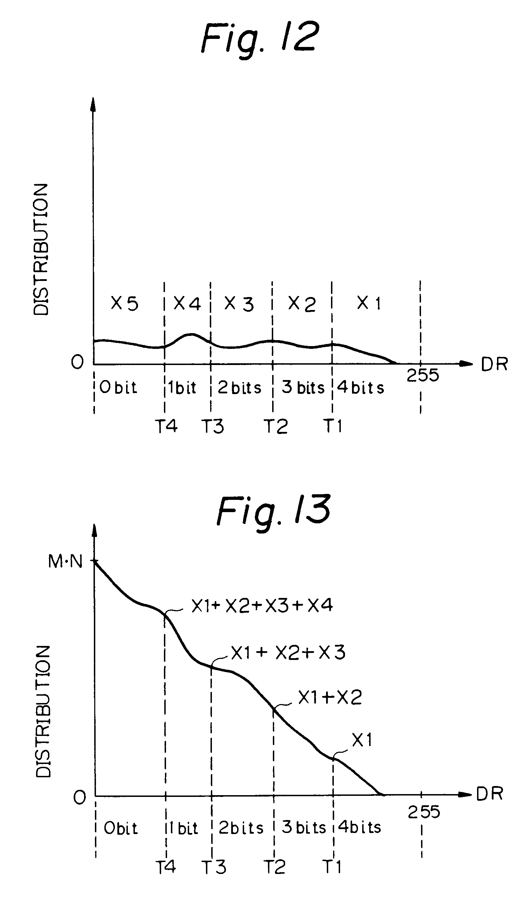

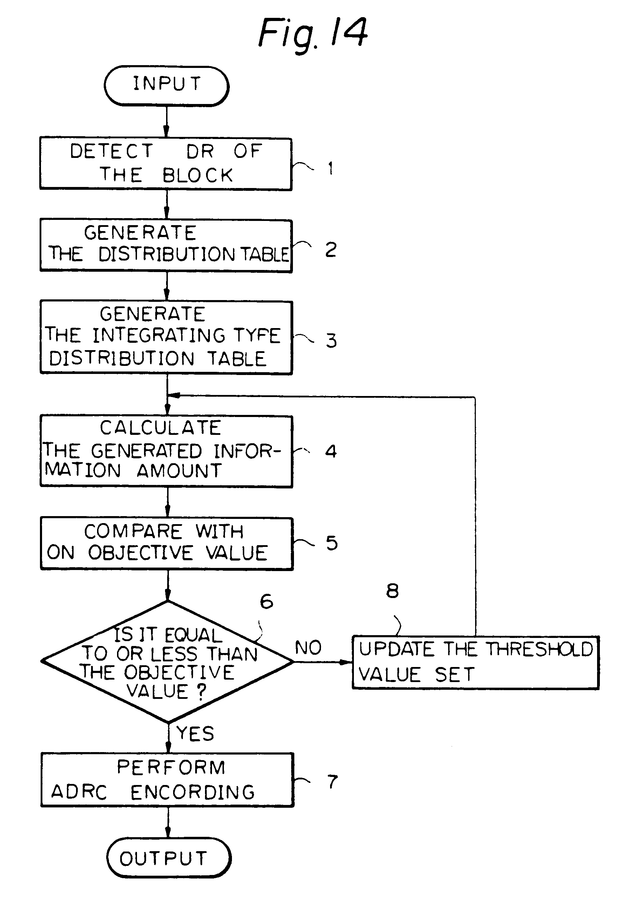

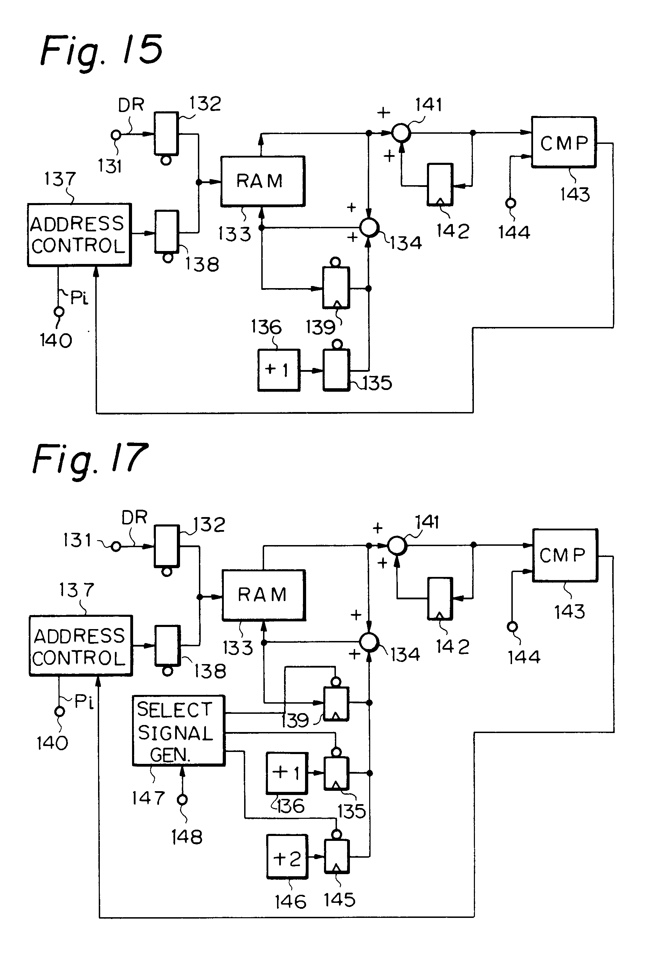

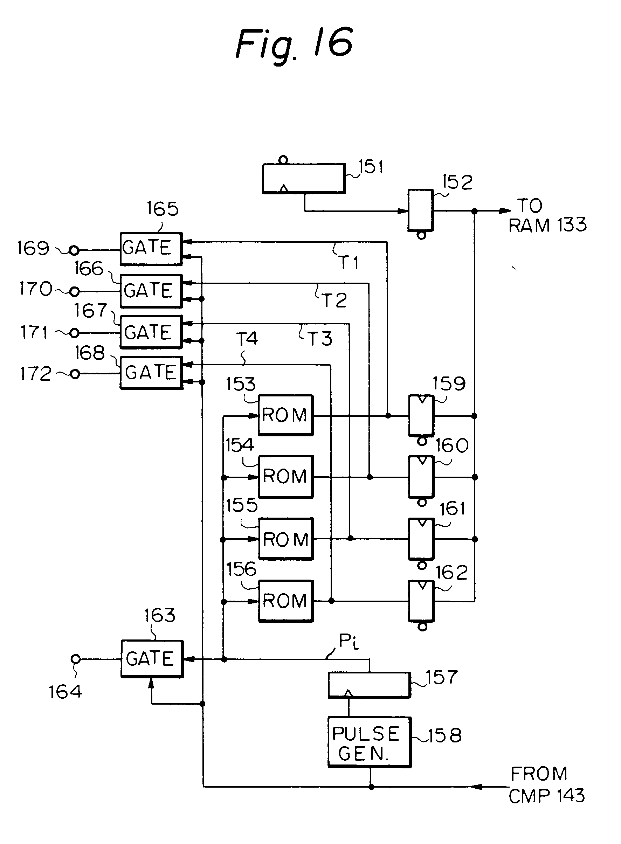

Figure 9 shows a specific example of the encoding and decoding of this one embodiment. The necessary bit number is one bit in the case of the maximum distortion (Ex = 4) and the dynamic range DR (9) of the data PDI after the elimination of the minimum value, as can be understood from said table. With this one bit, an encoded code DT of (0) is output when the value of the data PDI lies in the range (0 ~ 8), and an encoded code DT of (l) is output with the value (9) of the data PDI. On the reception side, (L0 = 4) and (Ll = l3) are employed as decoded levels.

On the other hand, in the case of a system in which the decoding is made to be adaptive to the dynamic range every block, the DR can be recognised from reception data. In an example similar to Figure 9, the dynamic range DR is recognised as (9), and the necessary bit number corresponding to the DR is determined. Also, since the division number is determined from that necessary bit number, the two-division is done as shown in Figure l0. Each of the central levels (L0 = 2) (L0 = 7) of the respectively divided regions is assumed to be a decoded level. As apparent from the comparison of Figure 9 with Figure l0, the quantisation distortion in the latter case is small.

Description of the encoder 7 will be given referring to Figure 8. In Figure 8 data-conversion tables for quantisation of the respective maximum distortions (Ex = 0) (Ex = I) --- (Ex = l5) are stored in sixteen ROMs (read only memories) indicated at 50, 5l, ---, 65. Picture data PD from the delay circuit 3 is supplied through an input terminal 43 to a subtraction circuit 45, and simultaneously the minimum value MIN from an input terminal 44 is given to the circuit 45. The data PDI is obtained from this subtraction circuit 45 after eliminating the minimum value.

The dynamic range DR from an input terminal 46 of each block and the data PDI after the elimination of the minimum value are input in turn to the ROM 50 to the ROM 65. Quantisation is carried out with the bit number determined by a predetermined maximum distortion and the dynamic range DR so that encoded codes DT0 to DTl5 corresponding to the data PD are output from the ROMs 50 to 65, respectively The encoded codes DT0 to DTl5 are supplied to a selector 47. The maximum distortion Ex is applied to the selector 47 from a terminal 48, and an encoded code corresponding to the maximum distortion Ex is selected by the selector 47 to be taken out to an output terminal 49.

In the abovementioned embodiment, the so-called linear quantisation technique, or the technique to perform the quantisation so that the maximum distortion is made constant, has been employed. However, a non-linear quantisation technique may be adopted using a visual characteristic so that the deterioration is not noticeable in a large block even if the maximum distortion is large.

Referring to Figure ll, the variable quantisation performed in the encoder 7 will be described. Tl, T2, T3 and T4 are threshold levels or values for determining the allocation bit numbers, respectively. Among those levels, there is a relationship of (T4 < T3 < T2 < T1). In the case of DR = (T4-I), only the maximum value MAX and the minimum value MIN are transmitted as shown at A of Figure ll, and a middle level L0 is employed as a decoded level. As a result, if the dynamic range DR is (T4-I) as shown in A of Figure ll, the quantisation width becomes $\Delta 0$. In the case of $(0 \leq DR \leq T4-I)$, the allocation bit number is 0.

Referring to B of Figure ll, which shows the case of DR = T3-I, the allocation bit number is made to one bit when there is a relationship of $(T4 \leq DR \leq T3-I)$. Consequently, a detected dynamic range DR is divided into two level ranges, and the level range to which picture element data PDI belongs is examined using the quantisation width $\Delta 1$. A code signal of either "0" or "1" corresponding to the level range is assigned, and the decoded level is made to L0 or Ll.

In the variable length encoding shown in Figure ll, non-linear quantisation is carried out so that the quantisation width $\Delta i$ $(\Delta 0 < \Delta 1 < \Delta 2$ & $\Delta 3 < \Delta 4)$ increases with DR. With the non-linear quantisation, the maximum distortion is made small in a block with a small DR, which gives noticeable encoding distortion, whereas the maximum distortion is made large in a block having a large DR. This contributes to the enhancement of compression rate.

In the case of DR = (T2-I), a detected DR is divided into four level ranges as shown at C of Figure ll, and two bits (00), (0l), (l0) and (ll) are allotted to the respective level ranges. The middle levels of those ranges become the decoded levels L0, L1, L2 and L3. Therefore, the level range to which the data PDI belongs, is examined using the quantisation width $\Delta 2$. In the case of $(T3 \leq DR \leq T2-I)$, the allocation bit number becomes two.

In addition, in the case of DR (Tl-I), a detected DR is divided into eight level ranges, and three bits (000) (00l) ... (lll) are allotted to the respective ranges. The middle levels of those ranges become the decoded levels L0, L1, ... L7. For this reason, the quantisation width is made to $\Delta 3$. In the case of $(T2 \leq DR \leq Tl-I)$, the allocation bit number is three.

In the case of DR = 255, a detected DR is divided into l6 level ranges as shown at E of Figure ll, and four bits (0000), (000l, ... (llll) are allotted to the respective ranges. The middle levels of those ranges are made to the decoded levels L0, Ll, ... Ll5. The quantisation width consequently becomes $\Delta 4$. In the case of $(Tl \leq DR \leq 255)$, the allocation bit number is four bits.

For the threshold values T1 to T4, for example, the following eleven sets, which are differentiated by the parameter codes Pi, are prepared at the maximum transmission rate (2 bits/picture element).

|      | T4 | T3 | T2  | T1  |
|------|----|----|-----|-----|
| P1   | 0  | 3  | 11  | 39  |
| P2   | 2  | 7  | 23  | 63  |
| P3   | 4  | 11 | 31  | 79  |
| P4   | 6  | 15 | 39  | 103 |
| P5   | 8  | 19 | 47  | 119 |
| P6   | 10 | 23 | 55  | 135 |
| P7   | 12 | 27 | 63  | 151 |
| P8   | 14 | 33 | 79  | 183 |
| P9   | 16 | 37 | 87  | 207 |
| P10  | 18 | 41 | 103 | 255 |
| P11  | 20 | 71 | 255 | -   |

Among the above threshold values, the threshold value set designated by the parameter code P1 can provide the minimum quantisation distortion. In the distribution table generation circuit 5, the distribution of the dynamic ranges DRs of all blocks in one frame is obtained. By sequentially applying said threshold value sets to the distribution starting at the set showing at the parameter code PI, ADRC (adaptive dynamic range coding) is performed to calculate all the bit numbers (i.e. generated information amount) of the code signal DT. Said information amount is compared with an already known data threshold value so that a threshold value set, which provides as little distortion as possible, can be determined within the range that said amount does not exceed the data threshold value.

Figure I2 shows an example of the distribution. In the drawing, the abscissa indicates the dynamic ranges DRs ranging from 0 to 255, whereas the ordinate indicates the distribution. xl, x2, x3, x4 and x5 represent block numbers included in five ranges of the DRs, which have been divided by the threshold values TI to T4. Since 0 bit is allotted to the blocks having DRs equal to or less (T4-I), the block number x5 does not contribute to the generated information amount. As a result, this amount can be obtained by $4xl + 3x2 + 2x3 + x4$.

The generated information is compared with the data threshold value. When the former exceeds the latter, a set having a larger threshold value is applied, and the generated information amount is calculated similarly. To perform the above evaluation, the processes for obtaining the sum of the distribution within each range of each pre-established threshold value set, multiplying the allocation bit number by said sum, and adding the multiplied value are needed. However, if these processes are carried out each time the threshold value sets are changed, it takes time to finally obtain an optimum threshold value set.

In another embodiment, the distribution shown in Figure I2 is converted into the integrating type one shown in Figure I3 so that the generated information amount corresponding to different threshold value sets can be calculated at higher speed so as to reduce the finalising time taken until the optimum threshold value set is obtained.

As can be understood from Figure I3, an integrating type distribution graph is obtained by sequentially integrating the generation distribution of smaller DRs starting at the distribution of the maximum DR. As a result, the integrating distribution up to the threshold value TI becomes xl. Similarly, (xl + x2), (xl + x2 + x3) and (xl + x2 + x3 + x4) are the integrating distribution up to the threshold values T2, T3 and T4, respectively.

The generated information amount for the threshold values TI to T4 is obtained like $4(xl - 0) + 3[(x1 + x2) - x1] + 2[(x1 + x2 + x3) - (x1 + x2)] + 1[(x1 + x2 + x3 + x4) - (x1 + x2 + x3)] = 4x1 + 3x2 + 2x3 + 1x4$. Once the integrating type distribution graph (integrating type distribution table) shown in Figure I3 is made, the generated information amount can immediately be obtained by the sum of four numbers when the threshold value sets are updated.

Figure I4 is a flow chart for describing the abovementioned buffering operation. First, the dynamic ranges DRs of all blocks in one picture, for example one frame, are detected (step (I)). The distribution table (refer to Figure I2) of the DRs in one frame is then made (step (2)). This distribution table is converted into the integrating type one (refer to Figure I3) (step (3)). The generated information for the threshold value sets is calculated (step (4)). In this case, the calculation at step (4) starts at the threshold value set, which provides the minimum quantisation distortion (the threshold value set assumed by the parameter code PI).

The generated information amount obtained is compared with an objective value (data threshold value) (step (5)). The objective value is the maximum value of the transmission data (for example, two bits/picture elements). This comparison result is judged at the step (6). In the case where the generated information amount is equal to or less than the objective value, the ADRC is done using the threshold value set which

8

provides the minimum quantisation distortion (step (7)). If said information amount exceeds the objective value, the threshold value set is updated (step (8)), and the steps (4), (5) and (6) are repeated with respect to a new threshold value set, which provides larger quantisation distortion.

Though the dynamic range DR, the minimum MIN, the parameter code Pi and a redundant code for error correction are transmitted in addition to the code signal DT, these data values can be neglected in the examination of the transmission rate by giving an offset to the objective value, since each of the data values has a variable length.

Figure l5 shows an example of a circuit for the above-described buffering operation. This circuit is employed in place of the distribution table generating circuit 5 and the Ex decision circuit 6 shown in Figure l. In Figure l5, a dynamic range DR is supplied to an input terminal l3l. The DR is given to a RAM (random access memory) l33 as an address signal through a register l32 having an output control function. The RAM l33 has addresses (0 to 255), and in its initial state, all the memory contents of the RAM are cleared.

Data read out from the RAM l33 is sent to an adder l34. The output data of the adder l34 is supplied to the RAM l33 as data input. Dynamic ranges DRs of each block are given to the RAM l33 via the register l32 after the initialisation has been completed. After data is read out of the RAM l33, the output data of the adder l34 is written in the same address. Every time the address corresponding to the DR is accessed, data at that address is incremented, since the output of a (+1) generator l36 is supplied to the adder l34 through a register l35.

Therefore, at the time the supply of the DRs of all blocks in one frame has been completed, the DR distribution table is stored at the RAM l33.

Next, registers l38 and l39 are brought into output-enabling states, the register l35 is brought into an output-disabling state, and the integrating type distribution table is made. An address signal from an address controller l37 is given to the RAM l33 through the register l38. This address signal is used for the decrement of (-l) from 255.

Data read out of the RAM l33 is added to data previously read and stored in the register l39 at the adder l34. Since the output data of the adder l34 is written in the same address as the read address in the RAM l33, the integrating type distribution table is stored in the RAM l33 at the time the address has been decremented to 0.

To calculate the amount of generated information the threshold values Tl, T2, T3 and T4, which provide the minimum distortion, are sequentially supplied to the RAM l33 from the address controller l37. With the supply of the threshold value Tl, the distribution xl is read from the RAM l33 and given to an adder l4l. The output signal l4l is fed back thereto through a register l42 and supplied to a comparator l43. The comparator l43 compares a data threshold value (objective value) from a terminal l44 with the generated information value from the adder l4l.

The threshold value T2 following the threshold value Tl is given to the RAM l33. (xl + x2) is read out from the RAM l33 and added to xl stored in the register l42 at the adder l4l. The addition output is fed to the register l42. By the supply of the threshold value T3 to the RAM l33, (xl + x2 + x3) is then read out of the RAM l33 and added to (2xl + x2) stored in the register l42 at the adder l4l. Further, when the threshold value T4 is given to the RAM l33, the output read out of the RAM l33 and the output of the register l42 are added at the adder l4l. As a result, the output of the adder l4l is 4xl + 3x2 + 2x3 + 1x4. This output of the adder l4l is the generated information amount corresponding to the threshold values Tl to T4.

The comparator l43 generates a "0" comparison output signal when said amount exceeds the data threshold value, whereas the comparator l43 produces a "1" comparison output signal when said amount does not exceed the data threshold value. These comparison output signals are given to the address controller l37. The controller stops updating the threshold data value in response to the "1" comparison output, and produces the parameter code Pi indicative of the threshold value at that time to an output terminal l40.

The process for converting the abovedescribed distribution table of the DRs into the integrating type one and the process for determining the optimum threshold value can be executed in the vertical blanking period. Further a reduction of the processing time can be achieved by the adoption of a structure for allowing the capacity of the RAM l33 to quadruple and the integrating distribution to be output in parallel.

Figure l6 shows a structure of an example of the address controller l37. In the drawing, an address counter l5l generates an address for decrementing (-l) from 255 at the time of making the integrating type distribution table.

The address from the counter l5l is supplied to the RAM l33 through a register l52 having an output control function.

Eleven sets of threshold values are stored in four ROMs l53 - l56 such that the threshold values corresponding to Tl, T2, T3 and T4 are stored in ROMs l53, l54, l55 and l56 respectively. A four-bit parameter code Pi generated at an address counter I57 is given to the ROMs I53 to I56 as an address. The counter I57 is incremented by a pulse signal from a pulse generator I58. The comparison output signal of the comparator I43 is fed to the pulse generator I58, and a pulse signal having a predetermined period is given by the pulse generator I58 to the address counter I57 while said comparison output signal is "0". Consequently, threshold values are sequentially read out of the ROMs I53 to I56 until the generated information amount becomes equal to or smaller than the data threshold value. The threshold values read from the ROMs I53 to I56 are supplied to registers I59, I60, I6I and I62, each of which has an output control function, respectively. In response to an output signal, the register I59, I60, I6I and I62 sequentially output threshold values in that order starting at the register I59.

The parameter code Pi generated at the address counter I57 is taken out from an output terminal I64 via a gate circuit I63. The threshold values TI to T4 read from the ROMs I53 to I56 are taken out of output terminals I69, I70, I7I and I72 through gate circuits I65, I66, I67 and I68. The gate circuits I63 and I65 to I68 are brought into "ON" states in response to the "I" comparison output signal. As a result, the optimum threshold value set and the parameter code Pi for specifying this threshold value set are produced at the output terminals I64 and I69 to I72, respectively. The threshold value and code Pi are employed for ADRC.

The example of the above mentioned buffering can be applied to ADRC for three-dimensional blocks. If the three-dimensional blocks are composed of two two-dimensional areas belonging to two frames, for instance, the number of picture elements in one block becomes double. In ADRC for three-dimensions blocks, the presence or absence of changes between the two-dimensional areas is detected with a view to enhancing the compression rate. In the presence of change, the picture element data in the two two-dimensional areas, or, in other words, all the picture element data in a block is encoded. On the other hand, in the absence of change the picture element data in one two-dimensional area is encoded. As a result, the ratio of the generated information amount at a still part of the picture and a moving part becomes (I:2).

Another structure of the buffering circuit when the invention is applied to the above-described three-dimensional ADRC is illustrated in Figure I7. Added to the buffering circuit (refer to Figure I5) mentioned before, a register I45 having an output control function, a (+2) generator I46 and a selection signal generator I47 are provided. A flag for indicating the presence or absence of change is given via a terminal I48 to the generator I47. The registers I35, I39 and I45 are controlled by a selection signal from the selection signal generator I47.

A dynamic range sample DR is fed via an input terminal I3I to a register I32 having an output control function. During the formation of the distribution table in the RAM I33, the output of register I45 is enabled by a movement flag of each block to give (+2) to an adder I34 at a moving part of the picture and, at the still part, the output of register I35 is enabled to give to the adder I34. Thus the distribution table of the DRs is formed in the RAM I33.

It is to be noted that one block of data may be taken out by a circuit composed of the combination of a frame memory, a line delay circuit and a sample delay circuit.

Moreover, this invention permits the transmission rate to be constant. However, slight adjustment for the amount of data to be transmitted may be done using a buffer memory of small capacity.

According to the invention, the amount of data to be transmitted can be reduced as compared with that of the original data, and the transmission band can be narrowed. Also, the invention provides the advantage that the degradation of picture quality hardly occurs, because original picture element data can be almost perfectly recovered from reception data at the stationary portion having narrow width of a picture element data change. Further, since the dynamic range is determined in one-to-one correspondence with each block, the response at a transient portion such as an edge portion having great change width becomes satisfactory.

The invention enables the effective use of the transmission capacity of a transmission line, since the transmission rate of encoded output is brought to be constant by performing the encoding adapative to the amount of generated information such as moving. Also, in this invention, since the quantisation bit number is selected adaptive to the dynamic range in a block, a reproduced picture of excellent quality with uniform distortion can be produced. In addition, the invention allows variable length encoding without any codes for data separation thereby performing further compression.

## Claims

1. A high efficiency coding apparatus for coding digital video data in a block format allowing video data compression, comprising

first (32) and second (33) detecting means for detecting respective extreme values of the digital video data of plural picture elements in said block; the extreme value detected by the first detecting means being the maximum of said values, and that detected by the second detecting means being the minimum;

means for generating dynamic range information (4) of the block from said maximum and minimum values;

means (45) for forming the difference between one of said extreme values from each of the digital video data to generate modified digital video data;

means for generating a distribution table (5) of said dynamic range information during a predetermined period;

means for determining a number of bits in which to encode each word of a block during said predetermined period according to said dynamic range information of said distribution table and the capacity of data transmission means;

encoding means (7) for encoding said modified digital video data using the number of bits determined by said determining means per word; and

transmitting means for transmitting the output of said encoding means, a first additional code per block formed of at least two of said maximum value, minimum value and a signal based on said dynamic range information, and a second additional code for each said predetermined period.

2. Apparatus according to claim 1, characterised in that the one of the two extreme values used to form said modified digital data is the minimum detected value of the video digital data.

3. A high efficiency coding apparatus as claimed in claim 1 or 2, wherein said generating means includes first generating means for generating a first distribution table of said dynamic range information and second generating means for generating a second distribution table from said first distribution table wherein each value of the second distribution table equals the sum of the corresponding and previous values of the first distribution table.

4. A high efficiency coding apparatus as claimed in claim 1, 2 or 3, wherein said determining means includes calculating means for calculating the total bit number during said predetermined period on the basis of said distribution table and comparator means for comparing the total bit number with said capacity of said data transmission means.

5. A high efficiency coding apparatus as claimed in any one of the preceding claims, wherein said generating means includes a random access memory addressed by said dynamic range information and an address controller for controlling an address of said random access memory.

**Revendications**

1. Appareil de codage à haut rendement pour coder des données vidéo numériques sous un format de blocs autorisant la compression des données vidéo, comprenant :

des premiers (32) et seconds (33) moyens de détection pour détecter les valeurs extrêmes respectives des données vidéo numériques de plusieurs éléments d'image dans ledit bloc, la valeur extrême détectée par les premiers moyens de détection étant le maximum des dites valeurs, et celle détectée par les seconds moyens de détection étant la valeur minimum ;

des moyens (4) pour engendrer une information de gamme dynamique du bloc dont on a tiré lesdites valeurs minimum et maximum ;

des moyens (45) pour former la différence entre l'une des dites valeurs extrêmes et chacune des données vidéo numériques pour générer des données vidéo numériques modifiées ;

des moyens (5) pour engendrer une table de distribution des dites informations de gamme dynamique pendant une période prédéterminée ;

des moyens pour déterminer le nombre de bits sous lequel on doit encoder chaque mot d'un bloc pendant ladite période prédéterminée en fonction desdites informations de gamme dynamique de ladite table de distribution et de la capacité des moyens de transmission de données ;

des moyens d'encodage (7) pour encoder lesdites données vidéo numériques modifiées en utilisant le nombre de bits déterminé par lesdits moyens de détermination par mot ; et,

des moyens de transmission pour transmettre la sortie desdits moyens d'encodage, un premier code additionnel pour chaque bloc formé d'au moins l'une des deux dites valeur maximum et valeur minimum et d'un signal basé sur lesdites informations de gamme dynamique, et un second code additionnel pour chacune des dites périodes prédéterminées.

11

**2.** Appareil selon la revendication 1, caractérisé en ce que l'une des deux valeurs extrêmes utilisées pour former lesdites données numériques modifiées est la valeur détectée minimale des données numériques vidéo.

**3.** Appareil de codage à haut rendement tel que revendiqué dans les revendications 1 ou 2, dans lequel lesdits moyens générateurs comportent des premiers moyens générateurs pour générer une première table de distribution des dites informations de gamme dynamique et des seconds moyens générateurs pour générer une seconde table de distribution à partir de ladite première table de distribution dans lequel chaque valeur de la seconde table de distribution est égale à la somme des valeurs précédente et correspondante de la première table de distribution.

**4.** Appareil de codage à haut rendement, tel que revendiqué dans les revendications 1, 2 ou 3, dans lequel lesdits moyens de détermination comportent des moyens de calcul pour calculer le nombre de bits total pendant ladite période prédéterminée sur la base de ladite table de distribution, et des moyens de comparaison pour comparer le nombre de bits total avec ladite capacité desdits moyens de transmission de données.

**5.** Appareil de codage à haut rendement, tel que revendiqué dans l'une quelconque des revendications précédentes, dans lequel lesdits moyens générateurs comprennent une mémoire vive adressée par ladite information de gamme dynamique et un contrôleur d'adresses pour contrôler l'adresse de ladite mémoire vive.

**Patentansprüche**

**1.** Hochwirksame Kodiereinrichtung zum Kodieren digitaler Videodaten in ein eine Videodatenkompression erlaubendes Blockformat, mit
einer ersten (32) und zweiten (33) Detektoreinrichtung zum jeweiligen Detektieren von Extremwerten der digitalen Videodaten mehrerer Bildelemente in dem Block, wobei der durch die erste Detektoreinrichtung detektierte Extremwert das Maximum der Werte und der durch die zweite Detektoreinrichtung detektierte das Minimum ist,
einer Einrichtung zum Erzeugen dynamischer Bereichsinformation (4) des Blocks aus dem Maximum- und Minimumwert,
einer Einrichtung (45) zur Bildung einer Differenz zwischen einem der Extremwerte und den jeweiligen digitalen Videodaten zur Erzeugung modifizierter digitaler Videodaten,
einer Einrichtung zum Erzeugen einer Verteilungstabelle (5) der dynamischen Bereichsinformation während einer vorbestimmten Periode,
einer Einrichtung zum Bestimmen einer Zahl Bits, in welche jedes Wort eines Blocks während der vorbestimmten Periode entsprechend der dynamischen Bereichsinformation der Verteilungstabelle und der Kapazität einer Datenübertragungseinrichtung zu kodieren ist,
eine Kodiereinrichtung (7) zum Kodieren der modifizierten digitalen Videodaten unter Verwendung der durch die Bestimmungseinrichtung pro Wort bestimmten Zahl Bits, und
einer Übertragungseinrichtung zum Übertragen des Ausgangssignals der Kodiereinrichtung, eines ersten zusätzlichen Kodes pro aus wenigstens zwei der Maximumwerte, Minimumwerte und einem auf der dynamischen Bereichsinformation gebildetem Block und eines zweiten zusätzlichen Kodes für jede vorbestimmte Periode.

**2.** Einrichtung nach Anspruch 1, **dadurch gekennzeichnet,** daß der eine der zwei Extremwerte, der zur Bildung der modifizierten digitalen Daten benutzt ist, der detektierte Minimumwert der digitalen Videodaten ist.

**3.** Hochwirksame Kodiereinrichtung nach Anspruch 1 oder 2, wobei die Erzeugungseinrichtung eine erste Erzeugungseinrichtung zum Erzeugen einer ersten Verteilungstabelle der dynamischen Bereichsinformation und eine zweite Erzeugungseinrichtung zum Erzeugen einer zweiten Verteilungstabelle aus der ersten Verteilungstabelle aufweist, wobei jeder Wert der zweiten Verteilungstabelle gleich der Summe der korrespondierenden und vorhergehenden Werte der ersten Verteilungstabelle ist.

**4.** Hochwirksame Kodiereinrichtung nach Anspruch 1, 2 oder 3, wobei die Bestimmungseinrichtung eine Berechnungseinrichtung zum Berechnen der totalen Bitzahl während der vorbestimmten Periode auf der Basis der Verteilungstabelle und eine Komperatoreinrichtung zum Vergleichen der totalen Bitzahl mit der Kapazität der Datenübertragungseinrichtung aufweist.

5. Hochwirksame Kodiereinrichtung nach einem der vorhergehenden Ansprüche, wobei die Erzeugungseinrichtung einen durch die dynamische Bereichsinformation adressierten Speicher mit wahlfreiem Zugriff und einen Adressenkontroller zum Kontrollieren einer Adresse des Speichers mit wahlfreiem Zugriff aufweist.

## Fig. 1

## Fig. 2

## Fig. 3

## Fig. 4

## Fig. 5

## Fig. 6

Fig. 7A

Fig. 7B

Fig. 8

## Fig. 9

```
                    14
                    13  ◄─── L1
                    12
                    11
                    10
MAX ──┬── 9  ─────────
      │      8
      │      7
      │      6
      │      5
 DR   │      4  ◄─── L0
      │      3
      │      2
      │      1
MIN ──┴── 0  ─────────
```

## Fig. 10

```
                    14
                    13
                    12
                    11
                    10
MAX ──┬── 9  ─────────
      │      8
      │      7  ◄─── L1
      │      6
      │      5
 DR   │      4
      │      3
      │      2  ◄─── L0
      │      1
MIN ──┴── 0  ─────────
```

17

# Fig. 11

# Fig. 12

# Fig. 13

EP 0 225 181 B1

## Fig. 14

```
              INPUT

      DETECT   DR  OF          1
        THE  BLOCK

         GENERATE              2
    THE  DISTRIBUTION TABLE

         GENERATE
    THE  INTEGRATING TYPE      3
     DISTRIBUTION  TABLE

         CALCULATE
    THE GENERATED INFOR-       4
     MATION  AMOUNT

      COMPARE  WITH            5
    ON OBJECTIVE  VALUE

                          6                    8
        IS IT EQUAL
       TO OR LESS THAN   NO    UPDATE THE THRESHOLD
       THE OBJECTIVE           VALUE SET
          VALUE ?
            YES
        PERFORM               7
    ADRC  ENCORDING

           OUTPUT
```

20

# Fig. 15

# Fig. 17

21

# Fig. 16